(19)

**Europäisches Patentamt**

**European Patent Office**

**Office européen des brevets**

(11) **EP 4 770 214 A1**

(12) **EUROPEAN PATENT APPLICATION**
published in accordance with Art. 153(4) EPC

(43) Date of publication:
**01.07.2026 Bulletin 2026/27**

(21) Application number: **24890109.2**

(22) Date of filing: **25.06.2024**

(51) International Patent Classification (IPC):
*H04W 52/36* (2009.01)

(86) International application number:
**PCT/CN2024/101281**

(87) International publication number:
**WO 2025/102740 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.11.2023 CN 202311515368**

(71) Applicant: **ZTE CORPORATION
Shenzhen, Guangdong 518057 (CN)**

(72) Inventors:
• **XING, Weimin**
  **Shenzhen, Guangdong 518057 (CN)**
• **HU, Yuzhou**
  **Shenzhen, Guangdong 518057 (CN)**
• **CHEN, Jie**
  **Shenzhen, Guangdong 518057 (CN)**
• **LU, Youxiong**
  **Shenzhen, Guangdong 518057 (CN)**

(74) Representative: **Aipex B.V.
Vestdijk 51
5611 CA Eindhoven (NL)**

(54) **DETERMINATION METHOD, COMMUNICATION NODE, AND STORAGE MEDIUM**

(57)     Provided are a determination method, a communication node, and a storage medium. The determination method includes determining the number N1 of feedback channels simultaneously transmitted on a feedback occasion and determining a first transmission power of feedback resource blocks in the determined N1 feedback channels; and if the total power for transmitting the feedback resource blocks in the N1 feedback channels at the first transmission power and transmitting N2 common resource blocks corresponding to the N1 feedback channels at a second transmission power is less than or equal to the maximum power of a terminal device, transmitting the feedback resource blocks in the N1 feedback channels at the first transmission power and transmitting the N2 common resource blocks corresponding to the N1 feedback channels at the second transmission power; otherwise, transmitting the feedback resource blocks in the N1 feedback channels at a third transmission power and transmitting the N2 common resource blocks corresponding to the N1 feedback channels at a fourth transmission power, where the total power for transmitting the feedback resource blocks and the common resource blocks is equal to the maximum power of the terminal device.

Determine the number N1 of feedback channels simultaneously transmitted on a feedback occasion and determine a first transmission power of feedback resource blocks in the determined N1 feedback channels — S110

If the total power for transmitting the feedback resource blocks in the N1 feedback channels at the first transmission power and transmitting N2 common resource blocks corresponding to the N1 feedback channels at a second transmission power is less than or equal to the maximum power of a terminal device, transmit the feedback resource blocks in the N1 feedback channels at the first transmission power and transmit the N2 common resource blocks corresponding to the N1 feedback channels at the second transmission power — S120

If the total power for transmitting the feedback resource blocks in the N1 feedback channels at the first transmission power and transmitting N2 common resource blocks corresponding to the N1 feedback channels at a second transmission power is greater than the maximum power of a terminal device, transmit the feedback resource blocks in the N1 feedback channels at a third transmission power and transmit the N2 common resource blocks corresponding to the N1 feedback channels at a fourth transmission power, where the total power for transmitting the feedback resource blocks and the common resource blocks is equal to the maximum power of the terminal device — S130

**FIG. 1**

**Description**

TECHNICAL FIELD

The present application relates to the field of communication technology, specifically a determination method, a communication node, and a storage medium.

BACKGROUND

Direct communication may also be referred to as sidelink (SL) communication. For certain signals/channels of SL, it is required to satisfy requirements on occupied channel bandwidth (OCB), including feedback channels. At present, power control for feedback channels takes into account only resource blocks carrying feedback information. How to handle common resource blocks has become an urgent technical problem to be solved.

SUMMARY

The present application provides a determination method, a communication node, and a storage medium.
In a first aspect, embodiments of the present application provide a determination method. The determination method includes determining the number N1 of feedback channels simultaneously transmitted on a feedback occasion and determining a first transmission power of feedback resource blocks in the determined N1 feedback channels; and in response to the total power for transmitting the feedback resource blocks in the N1 feedback channels at the first transmission power and transmitting N2 common resource blocks corresponding to the N1 feedback channels at a second transmission power being less than or equal to the maximum power of a terminal device, transmitting the feedback resource blocks in the N1 feedback channels at the first transmission power and transmitting the N2 common resource blocks corresponding to the N1 feedback channels at the second transmission power; or in response to the total power for transmitting the feedback resource blocks in the N1 feedback channels at the first transmission power and transmitting N2 common resource blocks corresponding to the N1 feedback channels at a second transmission power being greater than the maximum power of a terminal device, transmitting the feedback resource blocks in the N1 feedback channels at a third transmission power and transmitting the N2 common resource blocks corresponding to the N1 feedback channels at a fourth transmission power, where the total power for transmitting the feedback resource blocks and the common resource blocks is equal to the maximum power of the terminal device.
In a second aspect, embodiments of the present application provide a communication node. The communication node includes one or more processors; and a storage apparatus configured to store one or more programs. When executed by the one or more processors, the one or more programs cause the one or more processors to perform the determination method of any embodiment of the present application.
In a third aspect, embodiments of the present application provide a storage medium storing a computer program which, when executed by a processor, causes the processor to perform the method of any embodiment of the present application.
The preceding embodiments and other aspects of the present application and implementations thereof are described in more detail in the brief description of drawings, detailed description, and claims.

BRIEF DESCRIPTION OF DRAWINGS

FIG. 1 is a flowchart of a determination method according to embodiments of the present application.

FIG. 2 is a diagram illustrating the structure of a determination apparatus according to embodiments of the present application.

FIG. 3 is a diagram illustrating the structure of a communication node according to embodiments of the present application.

DETAILED DESCRIPTION

Objects, technical solutions, and advantages of the present application are clearer from a detailed description of embodiments of the present application in conjunction with the drawings. It is to be noted that if not in collision, embodiments of the present application and features therein may be combined with each other in any manner.

The steps illustrated in the flowcharts among the drawings may be performed by, for example, a computer system capable of executing a set of computer-executable instructions. Although logical sequences are shown in the flowcharts, the shown or described steps may be performed in sequences different from those described herein in some cases.

Terms such as "first" and "second" in the present application are used for distinguishing between similar objects and are not necessarily used for describing a particular sequence or order.

Direct communication may also be referred to as sidelink (SL) communication. Hereinafter SL communication is used to represent direct communication. At present, SL communication operates in licensed bands or dedicated bands. For example, vehicle-to-everything (V2X) communication may operate in frequency bands dedicated to V2X. In recent years, with the development of SL communication, there has been an increasing demand for SL transmission in traditional unlicensed bands. Before SL transmission in an unlicensed band, according to relevant spectrum usage regulations, a channel access process, generally referred to as a Listen Before Talk (LBT) process, is required so as to avoid interference with devices of other systems. Generally, if a channel resource is determined to be idle within a detection duration corresponding to the LBT process (that is, LBT succeeds), a user equipment (UE) may continue transmission; otherwise, the UE is required to abandon the transmission.

In some regions, occupying unlicensed spectrum is required to satisfy an occupied channel bandwidth (OCB) requirement. That is, if a device accesses a channel for transmission, the bandwidth of a transmitted signal must occupy at least 80% of the bandwidth of the channel. For example, when a channel has a bandwidth of 20 MHz, it is generally required that the transmitted signal spans at least 16 MHz in the frequency domain. For certain signals/channels of SL, the OCB requirement is also required to be satisfied, including a feedback channel, such as a physical sidelink feedback channel (PSFCH). A PSFCH is generally used to carry only a small number of bits and occupies a very small bandwidth, for example, one physical resource block (PRB). To enable the PSFCH to satisfy the OCB requirement, the transmission bandwidth of the PSFCH is required to be adjusted accordingly, and the power control of the PSFCH is also required to be modified to adapt to the new transmission bandwidth. In addition, considering that a UE may transmit multiple PSFCHs on multiple channels, a power control scheme for PSFCHs across multiple channels is required to be comprehensively designed.

According to current discussions in the 3rd Generation Partnership Project (3GPP), in order for a PSFCH to satisfy the OCB requirement, an interlace resource block (IRB) structure may be used. For example, one IRB may include at least 10 PRBs. One approach is to divide frequency-domain resources on a PSFCH occasion into two categories: One category is common resource block (common RB) resources (a first type of IRB, also referred to as common resource blocks), and the other category is resources used to carry feedback information (a second type of IRB, also referred to as feedback resource blocks). For the common RB resources, all UEs may transmit the PSFCH on this occasion. These UEs occupy the same common RB resources to transmit signals for satisfying the OCB requirement. In this manner, regardless of how many UEs transmit simultaneously, only a single portion of overhead is required to satisfy the OCB requirement, namely the common RB resources. For the resources carrying feedback information, generally through resource mapping, different UEs may use different resources to feed back respective information. Through a combination of the two types of resources, overhead for satisfying the OCB requirement can be effectively controlled, and excessive impact on PSFCH capacity can be avoided.

However, this method still has many problems to be solved. In particular, current PSFCH power control considers only PSFCH resources used to carry feedback information and provides no definite solution for processing common RB resources.

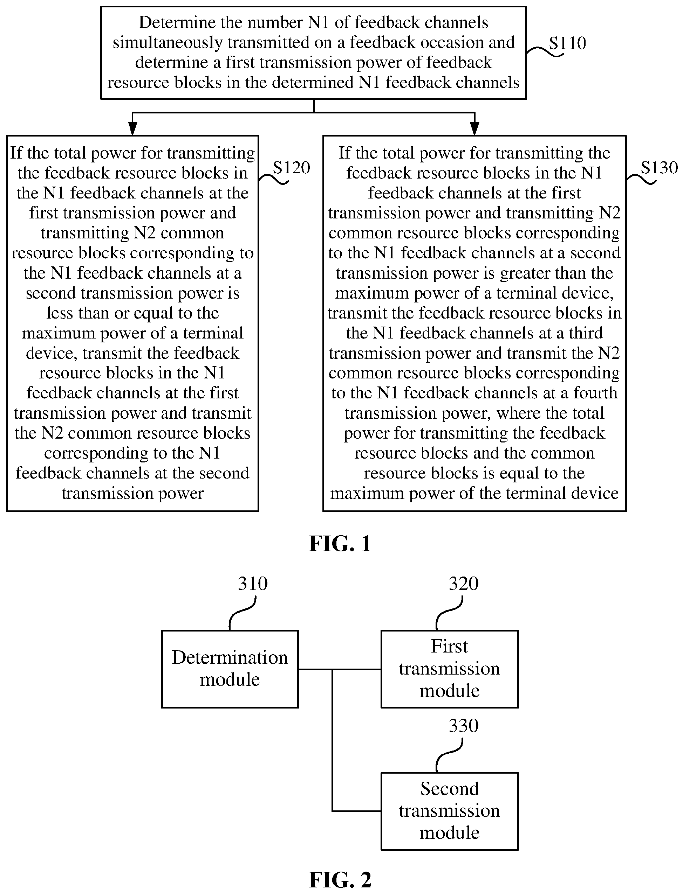

To solve this technical problem, the present application provides a determination method. In an example embodiment, FIG. 1 is a flowchart of a determination method according to embodiments of the present application. The present application may be applied to scenarios in which transmission powers of common resource blocks and feedback resource blocks are determined, so as to process the common resource blocks and the feedback resource blocks. The determination method of the present application may be applied to a determination apparatus. The determination apparatus may be implemented by software and/or hardware. The determination apparatus may be integrated into a communication node. The communication node may be a terminal device.

As shown in FIG. 1, the determination method of this embodiment of the present application includes steps S110 to S130.

In step S110, the number N1 of feedback channels simultaneously transmitted on a feedback occasion is determined, and a first transmission power of feedback resource blocks in the determined N1 feedback channels is determined.

The feedback channel may be a channel for feedback, for example, a PSFCH. The feedback occasion may be considered as a feedback occasion.

The number of feedback channels determined in this operation may be N1.

The feedback resource block may be considered as a resource for carrying feedback information. The first transmission power may be transmission power corresponding to a feedback resource block, for example, the determined transmission power for transmitting the feedback resource block.

This operation can determine the number N1 of feedback channels for feedback sent simultaneously and then determine the first transmission power of the feedback resource blocks in the N1 feedback channels to determine the transmission power for transmitting the feedback resource blocks and the common resource blocks based on the first transmission power.

In step S120, if the total power for transmitting the feedback resource blocks in the N1 feedback channels at the first transmission power and transmitting N2 common resource blocks corresponding to the N1 feedback channels at a second transmission power is less than or equal to the maximum power of a terminal device, the feedback resource blocks in the N1 feedback channels are transmitted at the first transmission power, the N2 common resource blocks corresponding to the N1 feedback channels are transmitted at the second transmission power, and the operation is ended.

The maximum power may be considered as the maximum transmission power of the communication node. The second transmission power may be considered as the power for transmitting the common resource block. Sizes of the first transmission power and the second transmission power are not limited.

If the total power for transmitting the feedback resource blocks in the N1 feedback channels at the first transmission power and transmitting N2 common resource blocks corresponding to the N1 feedback channels at a second transmission power is less than or equal to the maximum power of a terminal device, the feedback resource blocks in the N1 feedback channels are transmitted at the first transmission power, and the N2 common resource blocks corresponding to the N1 feedback channels are transmitted at the second transmission power.

In step S130, if the total power for transmitting the feedback resource blocks in the N1 feedback channels at the first transmission power and transmitting N2 common resource blocks corresponding to the N1 feedback channels at a second transmission power is greater than the maximum power of a terminal device, the feedback resource blocks in the N1 feedback channels are transmitted at a third transmission power, and the N2 common resource blocks corresponding to the N1 feedback channels are transmitted at a fourth transmission power, where the total power for transmitting the feedback resource blocks and the common resource blocks is equal to the maximum power of the terminal device.

Transmitting the feedback resource blocks in the feedback channels at the first transmission power may mean setting the power of each of the N1 feedback channels to the first transmission power. Transmitting the feedback channels at the third transmission power may mean setting the power of each of the N1 feedback channels to the third transmission power. Transmitting the common resource blocks at the second transmission power may mean setting the power of each of the N2 common resource blocks to the second transmission power. Transmitting the common resource blocks at the fourth transmission power may mean setting the power of each of the N2 common resource blocks to the fourth transmission power.

If the total power for transmitting the feedback resource blocks in the N1 feedback channels at the first transmission power and transmitting N2 common resource blocks corresponding to the N1 feedback channels at a second transmission power is less than or equal to the maximum power of a terminal device, the feedback resource blocks in the N1 feedback channels are transmitted at the first transmission power, and the N2 common resource blocks corresponding to the N1 feedback channels are transmitted at the second transmission power; otherwise, the feedback resource blocks in the N1 feedback channels are transmitted at a third transmission power, and the N2 common resource blocks corresponding to the N1 feedback channels are transmitted at a fourth transmission power, where the total power for transmitting the feedback resource blocks and the common resource blocks is equal to the maximum power of the terminal device.

If the total power for transmitting the feedback resource blocks in the N1 feedback channels at the first transmission power and transmitting N2 common resource blocks corresponding to the N1 feedback channels at a second transmission power is greater than the maximum power of a terminal device, the feedback resource blocks in the N1 feedback channels are transmitted at a third transmission power, and the N2 common resource blocks corresponding to the N1 feedback channels are transmitted at a fourth transmission power, where the total power for transmitting the feedback resource blocks and the common resource blocks is equal to the maximum power of the terminal device.

The third transmission power may be the power for transmitting the feedback resource blocks after the first transmission power is updated. The fourth transmission power may be the power for transmitting the common resource blocks after the second transmission power is updated.

In this embodiment, after the first transmission power is determined, the total power corresponding to the first transmission power and the second transmission power may be compared with the maximum power of the terminal device so that the transmission power for transmitting the feedback resource blocks and the common resource blocks can be determined.

According to the determination method of this embodiment of the present application, the total power corresponding to the first transmission power and the second transmission power is compared with the maximum power of the terminal device so that the transmission power for transmitting the feedback resource blocks and the transmission power for transmitting the common resource blocks are determined so that processing of the feedback resource blocks and the common resource blocks is achieved.

Based on the preceding embodiment, variant embodiments of the preceding embodiment are provided. It is to be noted that for ease of description, only differences from the preceding embodiment are described in the variant embodiments.

In an embodiment, the offset between the second transmission power and the first transmission power is a first offset configured by a network, the offset between the fourth transmission power and the third transmission power is a second offset configured by the network, and the first offset and the second offset are the same or different.

In an embodiment, the third transmission power is X times the maximum power of the terminal device, X is the ratio of the bandwidth of a feedback resource block to a first value, the first value is the sum of bandwidths of the N1 feedback channels and m times bandwidths of the N2 common resource blocks, and m is determined by a second offset configured by a network.

The offset between the second transmission power and the first transmission power may also be referred to as the ratio of the second transmission power to the first transmission power. The corresponding first offset configured by the network may also be referred to as a first ratio.

The offset between the third transmission power and the fourth transmission power may also be referred to as the ratio of the third transmission power to the fourth transmission power. The corresponding second offset configured by the network may also be referred to as a second ratio. It can be seen that the second ratio is the reciprocal of m.

In an embodiment, determining the first transmission power of the feedback resource blocks in the determined N1 feedback channels includes determining that the first transmission power of the feedback resource blocks in the determined N1 feedback channels is one of the following: a fifth transmission power determined based on power control; Y times the usage power of the terminal device; or the maximum value or the minimum value of the fifth transmission power and Y times the usage power of the terminal device.

In this embodiment, it is determined that the first transmission power is a fifth transmission power determined based on power control; Y times the usage power of the terminal device; or the maximum value or the minimum value of the fifth transmission power and Y times the usage power of the terminal device.

The usage power of the terminal device may be considered as the maximum transmission power allocated to the feedback channels.

In an embodiment, in the determination method, at least one of the following applies: The usage power of the terminal device is equal to the maximum power of the terminal device; the offset between the usage power of the terminal device and the maximum power of the terminal device is equal to a third offset configured by a network; or Y is equal to the ratio of the bandwidth of a feedback resource block to the total bandwidth of the N1 feedback channels.

In an embodiment, determining the number N1 of feedback channels simultaneously transmitted on the feedback occasion includes determining that the number N1 of feedback channels simultaneously transmitted on the feedback occasion is equal to M; or determining that the number N1 of feedback channels simultaneously transmitted on the feedback occasion is equal to Nmax; or determining N1 feedback channels from M or Nmax feedback channels according to the priority order of the feedback channels. M is the number of to-be-sent feedback channels on the feedback occasion. Nmax is the maximum number of feedback channels that can be simultaneously transmitted by the terminal device.

In an embodiment, it is determined that the number N1 of feedback channels simultaneously transmitted on a feedback occasion is the number of feedback channels to be transmitted on the feedback occasion.

In an embodiment, it is determined that the number N1 of feedback channels simultaneously transmitted on a feedback occasion is the maximum number of feedback channels that can be simultaneously transmitted by the terminal device.

In an embodiment, it is determined that the number N1 of feedback channels simultaneously transmitted on a feedback occasion is the number of feedback channels to be transmitted on the feedback occasion or the maximum number of feedback channels that can be simultaneously transmitted by the terminal device.

In an embodiment, N1 is greater than or equal to max $(1, M_k)$, and $M_k$ is the maximum number of feedback channels that can be determined according to the priority order of the feedback channels by using a fifth transmission power without exceeding the usage power of the terminal device.

That $M_k$ is the maximum number of feedback channels that can be determined according to the priority order of the feedback channels by using a fifth transmission power without exceeding the usage power of the terminal device is also referred to as that $M_k$ is the maximum number of feedback channels that can be transmitted according to the priority order of the feedback channels by using a fifth transmission power without exceeding the usage power of the terminal device.

In an embodiment, the number of feedback resource blocks included in a feedback channel is a value configured by a network or is the number of resource blocks occupied by the feedback channel.

In an embodiment, the method for determining the transmission power based on power control is not limited. For example, determining the fifth transmission power is generally enabling path-loss-based power control, for example, PSFCH power control based on downlink or sidelink path loss. That is, the downlink power control parameter dl-P0-PSFCH is configured or provided.

The fifth transmission power corresponding to a feedback channel or the PRB of a feedback channel is denoted as $P_{PSFCH, one}$. When calculated by using a decibel value, this fifth transmission power may be:

$$P_{\text{PSFCH,one}} = P_{O,PSFCH} + 10\, log_{10}(\text{M}) + \alpha_{PSFCH} \cdot PL$$

Here $P_{O,PSFCH}$ is determined by network configuration and generally denotes the level of received power per unit bandwidth expected by the receiving end. $\alpha_{PSFCH}$ is configured by the network or is equal to 1 and generally denotes a path loss adjustment factor. M denotes the ratio of the bandwidth of a PRB or a feedback channel to the unit bandwidth. PL denotes a path loss measured based on a reference signal (RS).

In an embodiment, determining the power of one PSFCH and determining the power of one PSFCH PRB are equivalent. One PSFCH PRB may also be referred to as one dedicated PRB. For example, if one PSFCH includes $M_{PRB}^{PSFCH}$ PRBs, the power of one PSFCH is $M_{PRB}^{PSFCH}$ times the power of one PSFCH PRB. It can be learned that when one PSFCH includes multiple PRBs, the PRBs correspond to the same power, and when the number of PRBs included in one PSFCH is determined, the power of one PSFCH and the power of one PSFCH PRB may be converted from each other.

In an embodiment, $M_{PRB}^{PSFCH}$ may be provided by the network or equal to the number of PRBs occupied by one PSFCH.

In the present application, configuration provided by the network includes network configuration, pre-configuration, a protocol predefined value. These are subsequently collectively referred to as network configuration.

For example, the fifth transmission power for determining one feedback resource block and the fifth transmission power for determining one feedback channel are essentially the same.

In an embodiment, an example in which the total power for transmitting the feedback resource blocks in the N1 feedback channels at the first transmission power and transmitting the N2 common resource blocks corresponding to the N1 feedback channels at the second transmission power is calculated by using a decibel value may also be described as follows: The total power for transmitting the N1 feedback channels at the first transmission power plus a power offset is less than or equal to the maximum power of the terminal device, where the power offset is the ratio of the total bandwidth of the N1 feedback channels to a first value, and the first value is the sum of bandwidths of the N1 feedback channels and m times bandwidths of the N2 common resource blocks. m is determined by the first offset between the first transmission power and the second transmission power configured by the network.

In an embodiment, the determination method includes determining the number N1 of feedback channels simultaneously transmitted on a feedback occasion and determining a first transmission power of feedback resource blocks in the determined N1 feedback channels; and if the total power for transmitting the feedback resource blocks in the N1 feedback channels at the first transmission power is greater than or equal to the maximum power of a terminal device, transmitting the feedback resource blocks in the N1 feedback channels at a third transmission power and transmitting the N2 common resource blocks corresponding to the N1 feedback channels at a fourth transmission power, where the total power for transmitting the feedback resource blocks and the common resource blocks is equal to the maximum power of the terminal device; or if the total power for transmitting the feedback resource blocks in the N1 feedback channels at the first transmission power is less than the maximum power of a terminal device, transmitting the feedback resource blocks in the N1 feedback channels at the first transmission power and transmitting the N2 common resource blocks corresponding to the N1 feedback channels at a sixth transmission power. The sixth transmission power is the smaller one of the second transmission power and a seventh transmission power. The seventh transmission power is determined by subtracting the total power of transmitting the feedback resource blocks in the N1 feedback channels at the first transmission power from the maximum power of the terminal device and equally allocating the remaining power to the N2 common resource blocks. The seventh transmission power is the power of one common resource block after the equal allocation. This is described using linear values as an example.

In an embodiment, the UE is scheduled to transmit M PSFCHs. The maximum number of PSFCHs that can be transmitted by the UE is Nmax. The UE is required to determine the number N1 of finally transmitted PSFCHs and the transmission power of each of the N1 PSFCHs.

If path-loss-based power control is enabled, the fifth transmission power of one PSFCH or one feedback PRB may be obtained, where the fifth transmission power of one PSFCH is used as an example for description and is denoted as $P_{PSFCH,one}$.

If M does not exceed Nmax and if the power for transmitting the M PSFCHs at the fifth transmission power does not exceed the usage power of the UE, N1 is equal to M, and the first transmission power of one PSFCH is equal to the fifth transmission power; otherwise, N1 PSFCHs are selected according to the priority order, and the first transmission power of one PSFCH is equal to $min(P - 10log_{10}(N_1), P_{PSFCH,one})$, that is, the smaller one of the fifth transmission power and Y times the usage power P of the UE, where Y is equal to 1/N1.

If M exceeds Nmax, Nmax PSFCHs are selected from M according to the priority order. If the power for transmitting Nmax PSFCHs at the fifth transmission power does not exceed the usage power of the UE, N1 is equal to Nmax, and the first transmission power of one PSFCH is equal to the fifth transmission power; otherwise, N1 PSFCHs are selected according to the priority order, and the first transmission power of one PSFCH is equal to $min(P - 10log_{10}(N_1)$, $P_{PSFCH,one})$, that is, the smaller one of the fifth transmission power and Y times the usage power P of the UE, where Y is equal to 1/N1.

If no path-loss-based power control is enabled, the first transmission power of one PSFCH is equal to $P - 10log_{10}(N_1)$, that is, Y times the usage power P of the UE, where Y is equal to 1/N1.

To satisfy the OCB requirement, it is required to transmit common resource blocks. For example, transmitting only the N1 PSFCHs does not satisfy the OCB requirement, so it is required to transmit N2 additional common resource blocks.

If the power for transmitting the N1 PSFCHs at the determined first transmission power and transmitting the N2 common resource blocks at the second transmission power does not exceed the maximum power of the UE, the N1 PSFCHs are transmitted at the first transmission power and the N2 common resource blocks are transmitted at the second transmission power.

Transmitting N1 PSFCHs at the first transmission power may also be referred to as transmitting one feedback resource block at the first transmission power. As described in the preceding embodiments, using a linear value as an example, if one PSFCH includes $M_{PRB}^{PSFCH}$ PRBs, the first transmission power of one PSFCH is $M_{PRB}^{PSFCH}$ times the power of one feedback resource block (PSFCH PRB). Using a decibel value as an example, the power of one PSFCH is equal to the power of one feedback resource block plus $10*\log_{10}(M_{PRB}^{PSFCH})$.

The second transmission power is related to the first transmission power, that is, the second transmission power may be derived when the first transmission power is known. For example, the network configures the offset between the power of one feedback resource block and the power of one common resource block. If the first transmission power of one feedback resource block is P1, then the second transmission power P2 of one common resource block is equal to P1 + offset.

If the total power for transmitting the N1 PSFCHs at the determined first transmission power and transmitting the N2 common resource blocks at the second transmission power exceeds the maximum power of the UE, the N1 PSFCHs are transmitted at the third transmission power and the N2 common resource blocks are transmitted at the fourth transmission power. The third transmission power is X times the maximum power of the UE, where X is the ratio of the bandwidth of one PSFCH to the first value, and the first value is the sum of the bandwidths of the N1 feedback channels and m times the bandwidths of the N2 common resource blocks.

Transmitting N1 PSFCHs at the third transmission power may also be referred to as transmitting one feedback resource block at the third transmission power. As described in the preceding embodiments, using a linear value as an example, if one PSFCH includes $M_{PRB}^{PSFCH}$ PRBs, the third transmission power of one PSFCH is $M_{PRB}^{PSFCH}$ times the power of one feedback resource block (PSFCH PRB). Using a decibel value as an example, the power of one PSFCH is equal to the power of one feedback resource block plus $10*\log_{10}(M_{PRB}^{PSFCH})$.

The fourth transmission power is related to the third transmission power, that is, the fourth transmission power may be derived when the third transmission power is known. For example, the network configures the offset between the power of one feedback resource block and the power of one common resource block. If the third transmission power of one feedback resource block is P3, then the second transmission power P4 of one common resource block is equal to P3 + offset.

The value of m is determined by the offset. Generally, m is equal to 10^(offset/10), or equivalently, the offset is equal to $10*10log_{10}(m)$. For example, if m is equal to 0.5, this means that the power (linear value) of the common resource block is 0.5 times the power of the feedback resource block. In decibel calculation, the power of the common resource block is equal to the power of the feedback resource block plus $10*\log_{10}(0.5)$.

It can be seen that the power of one common resource block has a specific relationship with the power of one PSFCH PRB. For example, the power (decibel value) of one feedback resource block is offset by x to obtain the power of one common resource block, or the ratio of the power (linear value) of one feedback resource block to the power of one common resource block is configured by the network.

The usage power of the UE is the total power used by the UE for feedback transmission and may be equal to the maximum power of the UE or is equal to the power obtained by offsetting the maximum power of the UE, where the offset is configured by the network. For example, using a decibel value as an example, subtracting 10 dB from the maximum power of the UE represents the usage power of the UE, and using a linear value represents that the usage power of the UE is 0.1 times the maximum power of the UE.

In an embodiment, from the perspective of one PRB, the UE is scheduled to transmit M PSFCHs. The maximum number of PSFCHs that can be transmitted by the UE is Nmax. The UE is required to determine the number N1 of finally transmitted PSFCHs and the transmission power of each of the N1 PSFCHs. Among the N1 PSFCHs, the k-th PSFCH includes $M_{PRB,\,k}^{PSFCH}$ PSFCH PRBs.

If path-loss-based power control is enabled, the fifth transmission power of one PSFCH PRB may be obtained and denoted as $P_{PSFCH,one}$. If M does not exceed Nmax and if the total power for transmitting all PRBs in the M PSFCHs at the fifth transmission power does not exceed the usage power of the UE, then N1 is equal to M, and the first transmission power of one PSFCH PRB is equal to the fifth transmission power; otherwise (that is, the total power for transmitting all PRBs in the M PSFCHs at the fifth transmission power exceeds the usage power of the UE), N1 PSFCHs are selected according to the priority order, and the first transmission power of one PSFCH PRB is equal to $min(P - 10log_{10}(N_{1,PRB})$, $P_{PSFCH,one})$, where $N_{1,PRB}$ denotes the number of PSFCH PRBs in the N1 PSFCHs.

If path-loss-based power control is enabled, the fifth transmission power of one PSFCH PRB may be obtained and denoted as $P_{PSFCH,one}$. If M exceeds Nmax, Nmax PSFCHs are selected from M according to the priority order. If the power for transmitting Nmax PSFCHs at the fifth transmission power does not exceed the usage power of the UE, N1 is equal to Nmax, and the first transmission power of one PSFCH is equal to the fifth transmission power; otherwise (that is, the power for transmitting Nmax PSFCHs at the fifth transmission power exceeds the usage power of the UE), N1 PSFCHs are selected according to the priority order, and the first transmission power of one PSFCH is equal to $min (P - 10log_{10}(N_{1,PRB}), P_{PSFCH,one})$, where $N_{1,PRB}$ denotes the number of PRBs in N1 PSFCHs.

If no path-loss-based power control is enabled, the first transmission power of one PSFCH PRB is equal to $P - 10log_{10}(N_{1,PRB})$, where P denotes the usage power of the UE.

To satisfy the OCB requirement, it is required to transmit common resource blocks. For example, transmitting only the N1 PSFCHs does not satisfy the OCB requirement, so it is required to transmit N2 additional common resource blocks.

If the power for transmitting the N1 PSFCHs at the determined first transmission power and transmitting the N2 common resource blocks at the second transmission power does not exceed the maximum power of the UE, the $N_{1,PRB}$ PSFCH PRBs in the N1 PSFCHs are transmitted at the first transmission power and the N2 common resource blocks are transmitted at the second transmission power.

Using a linear value as an example, if one PSFCH includes $M_{PRB}^{PSFCH}$ PRBs, the first transmission power of one PSFCH is $M_{PRB}^{PSFCH}$ times the power of one feedback resource block (PSFCH PRB). Using a decibel value as an example, the power of one PSFCH is equal to the power of one feedback resource block plus $10*log_{10}(M_{PRB}^{PSFCH})$.

The second transmission power is related to the first transmission power, that is, the second transmission power may be derived when the first transmission power is known. For example, the network configures the offset between the power of one feedback resource block and the power of one common resource block. If the first transmission power of one feedback resource block is P1, then the second transmission power P2 of one common resource block is equal to P1 + offset.

If the total power for transmitting the N1 PSFCHs at the determined first transmission power and transmitting the N2 common resource blocks at the second transmission power exceeds the maximum power of the UE, the $N_{1,PRB}$ PSFCH PRBs in the N1 PSFCHs are transmitted at the third transmission power and the N2 common resource blocks are transmitted at the fourth transmission power. The third transmission power is X times the maximum power of the UE, where X is the ratio of the bandwidth of one PSFCH to the first value, and the first value is the sum of the bandwidths of the N1 feedback channels and m times the bandwidths of the N2 common resource blocks.

Transmitting N1 PSFCHs at the third transmission power may also be referred to as transmitting one feedback resource block (PSFCH PRB) at the third transmission power. As described in the preceding embodiments, using a linear value as an example, if one PSFCH includes $M_{PRB}^{PSFCH}$ PRBs, the third transmission power of one PSFCH is $M_{PRB}^{PSFCH}$ times the power of one feedback resource block (PSFCH PRB). Using a decibel value as an example, the power of one PSFCH is equal to the power of one feedback resource block plus $10*log_{10}(M_{PRB}^{PSFCH})$.

The fourth transmission power is related to the third transmission power, that is, the fourth transmission power may be derived when the third transmission power is known. For example, the network configures the offset between the power of one feedback resource block and the power of one common resource block. If the third transmission power of one feedback resource block is P3, then the second transmission power P4 of one common resource block is equal to P3 + offset.

The value of m is determined by the offset. Generally, m is equal to 10^(offset/10), or equivalently, the offset is equal to 10*10log_{10}(m). For example, if m is equal to 0.5, this means that the power (linear value) of the common resource block is 0.5 times the power of the feedback resource block. In decibel calculation, the power of the common resource block is equal to the power of the feedback resource block plus $10*\log_{10}(0.5)$.

In an embodiment, if the PSFCHs to be transmitted exceed the capability of the UE, or the transmission power exceeds the maximum power or the usage power of the UE, N1 PSFCHs may be selected according to the priority order.

In the process in which the UE determines N1 PSFCHs for transmission, first, the UE determines that PSFCHs carrying HARQ-ACK, if available, are transmitted according to the priority order (priority levels in ascending order), and then PSFCHs carrying conflict information, if available, are transmitted according to the priority order (priority levels in ascending order), where it is ensured that $N1 \geq \max(1, \sum_{i=1}^{K} M_i)$. For $1 \leq i \leq 8$, $M_i$ denotes the number of PSFCHs having a priority value of i and carrying HARQ-ACK. For $i > 8$, that is, $8 < i \leq 16$, $M_i$ denotes the number of PSFCHs having a priority value of 8 and carrying conflict information. The maximum value of K satisfies the following condition. If no K satisfying the following condition can be found, K is equal to 0.

The maximum value of K can be obtained when $\max(1, \sum_{i=1}^{K} M_i)$ PSFCHs are transmitted at the fifth transmission power and do not exceed the usage power of the UE.

In an embodiment, when the SL energy is measured, generally the impact of the PSFCH is considered. The SL energy may be received signal strength indication (RSSI) or may be SL reference signal received power (RSRP).

For SL energy measurement in a slot, if there are multiple candidate start symbol positions in the slot, the SL energy measurement starts from a symbol after the last start symbol position; otherwise, if there is only one start symbol position, the SL energy measurement starts from a symbol after the start symbol position, that is, the second SL symbol.

Alternatively, only when multiple start symbol positions are configured (multiple start symbols may be configured when the unlicensed channel operates) and one slot does not include PSFCH symbols, the SL energy measurement starts from a symbol after the last start symbol position; otherwise, the SL energy measurement starts from a symbol after the first or only one start symbol position, that is, the second SL symbol. For example, if a slot includes a PSFCH symbol, the SL energy measurement starts from a symbol after the first start symbol position, that is, starts from a second SL symbol.

Apparently, it is to be understood by those skilled in the art that each of the modules or steps of the present application described above may be implemented by a general-purpose computing apparatus, the modules or steps may be concentrated on a single computing apparatus or distributed on a network composed of multiple computing apparatuses, and optionally, the modules or steps may be implemented by program codes executable by the computing apparatus, so that the modules or steps may be stored in a storage apparatus and executed by the computing apparatus, or the modules or steps may be made into various integrated circuit modules separately, or multiple modules or steps therein may be made into a single integrated circuit module for implementation. Therefore, the present application is not limited to any particular combination of hardware and software.

The above are merely preferred embodiments of the present application and are not intended to limit the present application. For those skilled in the art, the present application may have various modifications and variations. Any modifications, equivalent substitutions, and improvements made within the spirit and principle of the present application are within the scope of the present application.

The determination method of the present application may be regarded as a power control method for signals. The method addresses a power control issue when a sidelink device sends PSFCH in an unlicensed band to satisfy an OCB requirement. Specifically, for different scenarios (namely, with DL power control or without DL power control), the method includes determining the power of a PSFCH and determining the power of a common resource block (RB).

In an example embodiment, the present application also provides a determination apparatus. FIG. 2 is a diagram illustrating the structure of a determination apparatus according to embodiments of the present application. The determination apparatus may be integrated into a communication node. The determination apparatus includes a determination module 310, a first transmission module 320, and a second transmission module 330.

The determination module 310 is configured to determine the number N1 of feedback channels simultaneously transmitted on a feedback occasion and determine a first transmission power of feedback resource blocks in the determined N1 feedback channels.

The first transmission module 320 is configured to, if the total power for transmitting the feedback resource blocks in the N1 feedback channels at the first transmission power and transmitting N2 common resource blocks corresponding to the N1 feedback channels at a second transmission power is less than or equal to the maximum power of a terminal device, transmitting the feedback resource blocks in the N1 feedback channels at the first transmission power and transmitting the N2 common resource blocks corresponding to the N1 feedback channels at the second transmission power.

The second transmission module 330 is configured to, if the total power for transmitting the feedback resource blocks in the N1 feedback channels at the first transmission power and transmitting N2 common resource blocks corresponding to the N1 feedback channels at a second transmission power is greater than the maximum power of a terminal device, transmitting the feedback resource blocks in the N1 feedback channels at a third transmission power and transmitting the N2 common resource blocks corresponding to the N1 feedback channels at a fourth transmission power, where the total power for transmitting the feedback resource blocks and the common resource blocks is equal to the maximum power of the terminal device.

The determination apparatus of this embodiment is configured to perform the determination method of the embodiment shown in FIG. 1. The determination apparatus of this embodiment has implementation principles and technical effects similar to those of the determination method of the embodiment shown in FIG. 1, and the details are not repeated here.

Based on the preceding embodiment, variant embodiments of the preceding embodiment are provided. It is to be noted that for ease of description, only differences from the preceding embodiment are described in the variant embodiments.

In an embodiment, the offset between the second transmission power and the first transmission power is a first offset configured by a network, the offset between the fourth transmission power and the third transmission power is a second offset configured by the network, and the first offset and the second offset are the same or different.

In an embodiment, the third transmission power is X times the maximum power of the terminal device, X is the ratio of the bandwidth of a feedback resource block to a first value, the first value is the sum of bandwidths of the N1 feedback channels and m times bandwidths of the N2 common resource blocks, and m is determined by a second offset configured by a network.

In an embodiment, the determination module 310 is configured to determine that the first transmission power of the feedback resource blocks in the determined N1 feedback channels is one of the following: a fifth transmission power determined based on power control; Y times the usage power of the terminal device; or the maximum value or the minimum value of the fifth transmission power and Y times the usage power of the terminal device.

In an embodiment, the determination module 310 is also configured to determine at least one of the following: The usage power of the terminal device is equal to the maximum power of the terminal device; the offset between the usage power of the terminal device and the maximum power of the terminal device is equal to a third offset configured by a network; or Y is equal to the ratio of the bandwidth of a feedback resource block to the total bandwidth of the N1 feedback channels.

In an embodiment, the determination module 310 is configured to determine that the number N1 of feedback channels simultaneously transmitted on the feedback occasion is equal to M; or determine that the number N1 of feedback channels simultaneously transmitted on the feedback occasion is equal to Nmax; or determine N1 feedback channels from M or Nmax feedback channels according to the priority order of the feedback channels. M is the number of to-be-sent feedback channels on the feedback occasion. Nmax is the maximum number of feedback channels that can be simultaneously transmitted by the terminal device.

In an embodiment, N1 is greater than or equal to max $(1, M_k)$, and $M_k$ is the maximum number of feedback channels that can be determined according to the priority order of the feedback channels by using a fifth transmission power without exceeding the usage power of the terminal device.

In an embodiment, the number of feedback resource blocks included in a feedback channel is a value configured by a network or is the number of resource blocks occupied by the feedback channel.

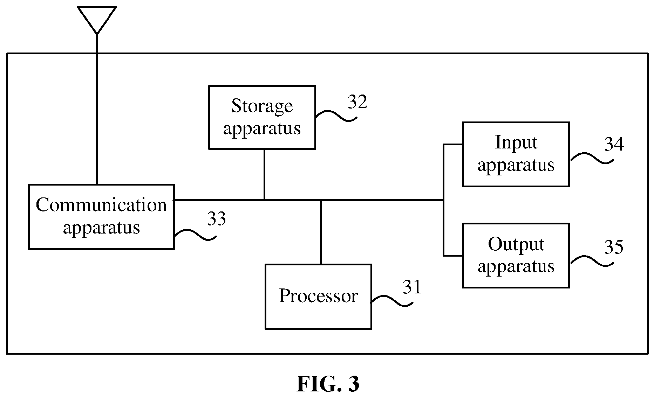

In an example embodiment, embodiments of the present application also provide a communication node. FIG. 3 is a diagram illustrating the structure of a communication node according to embodiments of the present application. As shown in FIG. 3, the communication node of the present application includes one or more processors 31 and a storage apparatus 32. One or more processors 31 may be provided in the communication node. FIG. 3 illustrates one processor 31 by way of example. The storage apparatus 32 is configured to store one or more programs. When executed by the one or more processors, the one or more programs cause the one or more processors to perform the method of any embodiment of the present application.

The communication node also includes a communication apparatus 33, an input apparatus 34, and an output apparatus 35.

The processor 31, the storage apparatus 32, the communication apparatus 33, the input apparatus 34, and the output apparatus 35 in the communication node may be connected via a bus or in other manners. FIG. 3 uses connection via a bus as an example.

The input apparatus 34 may be configured to receive inputted digital or character information and generate key signal input related to user settings and function control of the communication node. The output apparatus 35 may include a display device such as a display screen.

The communication apparatus 33 may include a receiver and a sender. The communication apparatus 33 is configured to perform information transceiving communication under the control of the processor 31.

As a computer-readable storage medium, the storage apparatus 32 may be configured to store software programs, computer-executable programs, and modules, such as program instructions/modules (for example, the determination module 310, the first transmission module 320, and the second transmission module 330 of the determination apparatus) corresponding to the determination method of any embodiment of the present application. The storage apparatus 32 may include a program storage region and a data storage region, where the program storage region may store an operating system and an application program required by at least one function while the data storage region may store data created depending on use of the communication node. In addition, the storage apparatus 32 may include a high-speed random-access memory and may further include a nonvolatile memory such as at least one disk memory, a flash memory, or another nonvolatile solid-state memory. In some embodiments, the storage apparatus 32 may also include memories which are remotely disposed with respect to the processor 31. These remote memories may be connected to the communication node via a network. Examples of the network include, but are not limited to, the Internet, an intranet, a local area network, a mobile communication network, and a combination thereof.

In an example embodiment, an embodiment of the present application provides a storage medium having a computer program stored thereon, where the computer program, when executed by a processor, causes the processor to perform any method of the present application. The storage medium stores the computer program, where the computer program, when executed by the processor, causes the processor to perform the determination method of any embodiment of the present application. The determination method includes determining the number N1 of feedback channels simultaneously transmitted on a feedback occasion and determining a first transmission power of feedback resource blocks in the determined N1 feedback channels; and if the total power for transmitting the feedback resource blocks in the N1 feedback channels at the first transmission power and transmitting N2 common resource blocks corresponding to the N1 feedback channels at a second transmission power is less than or equal to the maximum power of a terminal device, transmitting the feedback resource blocks in the N1 feedback channels at the first transmission power and transmitting the N2 common resource blocks corresponding to the N1 feedback channels at the second transmission power; or if the total power for transmitting the feedback resource blocks in the N1 feedback channels at the first transmission power and transmitting N2 common resource blocks corresponding to the N1 feedback channels at a second transmission power is greater than the maximum power of a terminal device, transmitting the feedback resource blocks in the N1 feedback channels at a third transmission power and transmitting the N2 common resource blocks corresponding to the N1 feedback channels at a fourth transmission power, where the total power for transmitting the feedback resource blocks and the common resource blocks is equal to the maximum power of the terminal device.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

Example embodiments of the present application are described above and are not intended to limit the scope of the present application.

It is to be understood by those skilled in the art that the term "terminal device" encompasses any suitable type of wireless user equipment, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

**Claims**

1. A determination method, comprising:

   determining a number N1 of feedback channels simultaneously transmitted on a feedback occasion and determining a first transmission power of feedback resource blocks in the determined N1 feedback channels; and
   in response to a total power for transmitting the feedback resource blocks in the N1 feedback channels at the first transmission power and transmitting N2 common resource blocks corresponding to the N1 feedback channels at a second transmission power being less than or equal to a maximum power of a terminal device, transmitting the feedback resource blocks in the N1 feedback channels at the first transmission power and transmitting the N2 common resource blocks corresponding to the N1 feedback channels at the second transmission power; or
   in response to a total power for transmitting the feedback resource blocks in the N1 feedback channels at the first transmission power and transmitting N2 common resource blocks corresponding to the N1 feedback channels at a second transmission power being greater than a maximum power of a terminal device, transmitting the feedback resource blocks in the N1 feedback channels at a third transmission power and transmitting the N2 common resource blocks corresponding to the N1 feedback channels at a fourth transmission power, wherein the total power for transmitting the feedback resource blocks and the common resource blocks is equal to the maximum power of the terminal device.

2. The method of claim 1, wherein an offset between the second transmission power and the first transmission power is a first offset configured by a network, an offset between the fourth transmission power and the third transmission power is a second offset configured by the network, and the first offset and the second offset are the same or different.

3. The method of claim 1 or 2, wherein the third transmission power is X times the maximum power of the terminal device, X is a ratio of a bandwidth of one feedback resource block of the feedback resource blocks to a first value, the first value is a sum of bandwidths of the N1 feedback channels and m times bandwidths of the N2 common resource blocks, and m is determined by a second offset configured by a network.

4. The method of claim 1, wherein determining the first transmission power of the feedback resource blocks in the determined N1 feedback channels comprises determining that the first transmission power of the feedback resource blocks in the determined N1 feedback channels is one of the following:

   a fifth transmission power determined based on power control;
   Y times a usage power of the terminal device; or

a maximum value or a minimum value of the fifth transmission power and Y times the usage power of the terminal device.

5. The method of claim 4, wherein at least one of the following applies:

the usage power of the terminal device is equal to the maximum power of the terminal device;
an offset between the usage power of the terminal device and the maximum power of the terminal device is equal to a third offset configured by a network; or
Y is equal to a ratio of a bandwidth of one feedback resource block of the feedback resource blocks to a total bandwidth of the N1 feedback channels.

6. The method of claim 1, wherein determining the number N1 of feedback channels simultaneously transmitted on the feedback occasion comprises:

determining that the number N1 of feedback channels simultaneously transmitted on the feedback occasion is equal to M; or
determining that the number N1 of feedback channels simultaneously transmitted on the feedback occasion is equal to Nmax; or
determining N1 feedback channels from M or Nmax feedback channels according to a priority order of the feedback channels;
wherein M is a number of to-be-sent feedback channels on the feedback occasion, and Nmax is a maximum number of feedback channels that can be simultaneously transmitted by the terminal device.

7. The method of claim 6, wherein N1 is greater than or equal to max $(1, M_k)$, and $M_k$ is a maximum number of feedback channels that can be determined according to the priority order of the feedback channels by using a fifth transmission power without exceeding a usage power of the terminal device.

8. The method of claim 1, wherein
a number of feedback resource blocks comprised in a feedback channel of the feedback channels is a value configured by a network or is a number of resource blocks occupied by the feedback channel.

9. A communication node, comprising:

one or more processors; and
a storage apparatus configured to store one or more programs;
wherein when executed by the one or more processors, the one or more programs cause the one or more processors to perform the method of any one of claims 1 to 8.

10. A storage medium storing a computer program which, when executed by a processor, causes the processor to perform the method of any one of claims 1 to 8.

Determine the number N1 of feedback channels simultaneously transmitted on a feedback occasion and determine a first transmission power of feedback resource blocks in the determined N1 feedback channels — S110

If the total power for transmitting the feedback resource blocks in the N1 feedback channels at the first transmission power and transmitting N2 common resource blocks corresponding to the N1 feedback channels at a second transmission power is less than or equal to the maximum power of a terminal device, transmit the feedback resource blocks in the N1 feedback channels at the first transmission power and transmit the N2 common resource blocks corresponding to the N1 feedback channels at the second transmission power — S120

If the total power for transmitting the feedback resource blocks in the N1 feedback channels at the first transmission power and transmitting N2 common resource blocks corresponding to the N1 feedback channels at a second transmission power is greater than the maximum power of a terminal device, transmit the feedback resource blocks in the N1 feedback channels at a third transmission power and transmit the N2 common resource blocks corresponding to the N1 feedback channels at a fourth transmission power, where the total power for transmitting the feedback resource blocks and the common resource blocks is equal to the maximum power of the terminal device — S130

**FIG. 1**

310

Determination module

320

First transmission module

330

Second transmission module

**FIG. 2**

**FIG. 3**

## INTERNATIONAL SEARCH REPORT

| International application No. |
|---|
| **PCT/CN2024/101281** |

### A. CLASSIFICATION OF SUBJECT MATTER

H04W 52/36(2009.01)i

According to International Patent Classification (IPC) or to both national classification and IPC

### B. FIELDS SEARCHED

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

WPABS, WPABSC, 3GPP, CNTXT, ENTXTC, CJFD, IEEE: 发射功率, 反馈, 反馈资源块, 功率, 公共, 通用, 资源块, 最大, 最大功率, transmission power, common, crb, max power, psfch, resource block, RB

### C. DOCUMENTS CONSIDERED TO BE RELEVANT

| Category* | Citation of document, with indication, where appropriate, of the relevant passages | Relevant to claim No. |
|---|---|---|
| X | CN 115915261 A (ZTE CORP.) 04 April 2023 (2023-04-04) description, paragraphs [0019]-[0246] | 1-10 |
| A | CN 115136523 A (HUAWEI TECHNOLOGIES CO., LTD.) 30 September 2022 (2022-09-30) entire document | 1-10 |
| A | CN 116782357 A (ASUSTEK COMPUTER INC.) 19 September 2023 (2023-09-19) entire document | 1-10 |
| A | US 2021250872 A1 (QUALCOMM INC.) 12 August 2021 (2021-08-12) entire document | 1-10 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 September 2024** | **20 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/101281**

| Patent document cited in search report | | | Publication date (day/month/year) | Patent family member(s) | | | Publication date (day/month/year) |
|---|---|---|---|---|---|---|---|
| CN | 115915261 | A | 04 April 2023 | None | | | |
| CN | 115136523 | A | 30 September 2022 | None | | | |
| CN | 116782357 | A | 19 September 2023 | KR | 20230136562 | A | 26 September 2023 |
| | | | | US | 2023300815 | A1 | 21 September 2023 |
| US | 2021250872 | A1 | 12 August 2021 | US | 11496966 | B2 | 08 November 2022 |

Form PCT/ISA/210 (patent family annex) (July 2022)